Europäisches Patentamt

European Patent Office

Office européen des brevets

(11) Veröffentlichungsnummer: **0 499 202 A2**

# EUROPÄISCHE PATENTANMELDUNG

(21) Anmeldenummer: **92102255.4**

(51) Int. Cl.⁵: **G01F 23/14**

(22) Anmeldetag: **11.02.92**

(30) Priorität: **12.02.91 DE 4104177**
**10.05.91 DE 4115292**

(43) Veröffentlichungstag der Anmeldung:
**19.08.92 Patentblatt 92/34**

(84) Benannte Vertragsstaaten:
**DE FR GB IT**

(71) Anmelder: **Pfister Messtechnik GmbH**
**Stätzlinger Strasse 70**
**W-8900 Augsburg(DE)**

(72) Erfinder: **Häfner, Hans Wilhelm**
**Fichtenweg 15**
**W-8890 Aichach-Walchshofen(DE)**
Erfinder: **Altmayer, Gerhard, Dr.-Ing.**
**Am Kohlwald 53 a**
**W-6639 Rehlingen-Siersburg(DE)**

(74) Vertreter: **Fiener, Josef et al**
**Patentanwälte Kahler, Käck & Fiener,**
**Gerberstrasse 3, Postfach 12 49**
**W-8948 Mindelheim(DE)**

(54) **Vorrichtung zum Feststellen der Druckverteilung über einer begrenzten Strecke und Verfahren zu deren Herstellung.**

(57) Eine Vorrichtung (120) zum Feststellen der Druckverteilung über einer begrenzten Strecke weist eine Vielzahl von in einem vorbestimmten Abstand zueinander angeordneten, mit einer Auswerteschaltung (50) verbundenen Drucksensoren (125) auf, die in/auf einem länglichen Trägerelement (120), etwa in einem vorzugsweise runden, strangförmigen Körper (128) aus elastomerem Material angeordnet, insbesondere eingebettet sind, der von einem unelastischen, in radialer Richtung jedoch verformbaren Mantel (126) damit fest verbunden umgeben ist. Die Vorrichtung läßt sich mit Vorteil als Füllstandsanzeige in einem Behälter und für verschiedene andere Zwecke verwenden.

FIG.7

Die Erfindung betrifft eine Vorrichtung zum Feststellen der Druckverteilung über einer begrenzten Strecke und ein Verfahren zu deren Herstellung mit den Merkmalen des Oberbegriffs des Patentanspruchs 1 bzw. 14, sowie die Verwendung derartiger Vorrichtungen.

In der Technik ergibt sich des öfteren das Problem, die Druckverteilung über eine begrenzte Strecke möglichst genau festzustellen. Eine spezielle Anwendung einer derartigen Messung ist die Füllstandsanzeige in einem flüssiges oder schüttfähiges Gut enthaltenden Behälter.

Die DE-A1-35 33 070 beschreibt eine derartige Füllstandsanzeige, bei der auf der Innenseite in die Behälterwand in vertikalen Abständen Aussparungen eingearbeitet sind, in die mit Dehnungsmeßstreifen versehene Druckmeßdosen eingesetzt sind. Diese Zellen sind mit einer Auswerteschaltung verbunden. Beim Entleeren des Behälters wird eine Zelle nach der anderen vom durch das Füllgut erzeugten Druck entlastet, und das von ihr abgegebene Signal zeigt den augenblicklichen Füllstand an. Die Formung derartiger Aussparungen und die Montage der Druckmeßdosen ist jedoch sehr aufwendig und arbeitsintensiv. Zudem können zwischen den Aussparungen und den Druckmeßdosen Dichtigkeitsprobleme auftreten.

Ähnliches gilt für den einzelnen Drucksensor gemäß der EP-A-0 255 084, der in die Öffnung einer Behälterwand plan zu dessen Innenseite eingesetzt ist, so daß der im Behälter herrschende Druck eine Kolbenfläche beaufschlagt und über ein elastomeres Material gleichförmig an einen Drucksensor mit einer Meßmembran weitergeleitet wird. Der Drucksensor ist mit einer Auswerteschaltung verbunden, so daß dessen Meßwerte angezeigt und ausgewertet werden können. Dabei ist ebenfalls nachteilig, daß für den Drucksensor eine Öffnung in der Behälterwand vorgesehen werden muß und insbesondere bei fließfähigem Füllgut in aufwendiger Weise abgedichtet werden muß.

Die DE-A1-36 41 482 beschreibt einen Füllstandssensor unter Verwendung eines Membranschalters mit einem scheibenartigen Gehäuse, das mit der Membran an eine Öffnung des Behälters angesetzt ist. Die DE-C2-33 27 047 beschreibt einen Flüssigkeitsstanddetektor, der an einem Koaxialkabel in dem Behälter aufgehängt ist und temperaturempfindliche Fühler aufweist, die in unterschiedlichen Höhen in dem Behälter hängen. Die DE-C3-31 48 383 befaßt sich mit einer Füllstandsanzeige für einen Kraftfahrzeug-Kraftstoffbehälter mit einer Sonde, auf der in zum Teil unterschiedlichen Abständen einzelne Kaltleiter angeordnet sind. Die DD-A1-247 971 befaßt sich mit einer Füllstandsanzeige, bei der ein piezoresistiver Druckwandler an einer Leitung hängend in bestimmter Höhe in die Flüssigkeit eingetaucht ist.

Der Erfindung liegt die Aufgabe zugrunde, eine Vorrichtung zum Feststellen der Druckverteilung über einer begrenzten Strecke anzugeben, die einfach und robust aufgebaut ist, kostengünstig herstellbar ist und vielseitig verwendet werden kann. Ferner sollen ein einfaches und kostengünstiges Verfahren zum Herstellen derartiger Vorrichtungen und besonders bevorzugte Verwendungen derartiger Vorrichtungen angegeben werden.

Gemäß der Erfindung wird diese Aufgabe gelöst durch eine Vorrichtung mit den Merkmalen des Patentanspruchs 1 bzw. ein Verfahren mit den Merkmalen des Patentanspruchs 14 und Verwendungen gemäß Patentanspruch 15.

Bevorzugte Weiterbildungen der erfindungsgemäßen Vorrichtung bzw. des erfindungsgemäßen Verfahrens sind in den abhängigen Ansprüchen gekennzeichnet.

Die Erfindung wird nachfolgend anhand mehrerer in der Zeichnung dargestellten Ausführungsbeispiele näher erläutert. Es zeigen:

Fig. 1    einen Vertikalschnitt durch einen Behälter mit einer ersten Ausführung der Vorrichtung zum Messen des Füllstandes;

Fig. 2    einen Vertikalschnitt durch den Behälter mit einer weiteren Ausführungsform der Füllstand-Meßvorrichtung mit zugehörigem schematischem Meßwert-Diagramm;

Fig. 3    einen Querschnitt entlang der Linie A-A in Fig. 2 durch das Trägerelement;

Fig. 4    eine abgewandelte Ausführungsform gemäß Fig. 3;

Fig. 5    eine weitere Abwandlung;

Fig. 6    einen Axial-Längsschnitt durch einen Abschnitt eines weiteren Ausführungsbeispiels der erfindungsgemäßen Vorrichtung; und

Fig. 7    einen Querschnitt längs der Linie B-B in Fig. 6.

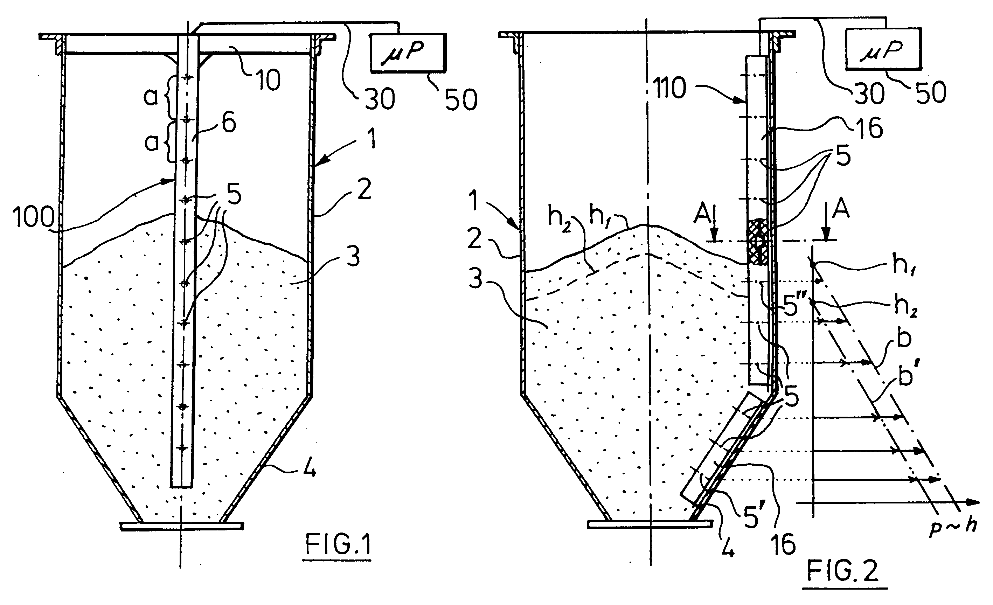

In Fig. 1 ist ein Behälter oder Tank 1 mit einer Wand 2 dargestellt. Im Innern des Behälters ist Material 3 eingefüllt, beispielsweise Flüssigkeit oder Schüttgut, das über einen Auslauftrichter 4 entnommen werden kann. Mehrere praktisch punktförmige Drucksensoren 5 sind an oder in einem länglichen Trägerelement 6 der Vorrichtung 100 in einem bestimmten, vorzugsweise gleichmäßigen vertikalen Abstand a zueinander angeordnet. Das Trägerelement 6 kann einen beliebigen Querschnitt aufweisen und ist an einer oberen Abstützung 10 befestigt und hängt in den Behälter 1 bis zu einer wesentlichen Tiefe, nämlich bis zu dessen Boden.

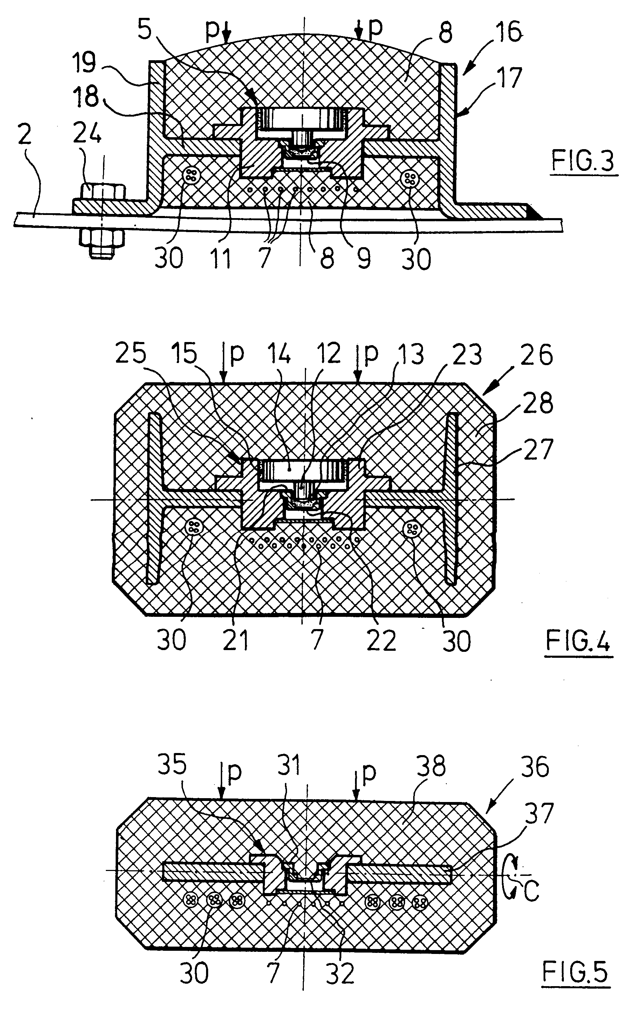

Um Meßfehler durch Schüttgutbewegungen auszuschließen, ist das Trägerelement 6 zugfest in seiner vertikalen Längserstreckung, jedoch in Querrichtung dazu (vgl. Darstellung in den Figuren 3 bis 5) relativ elastisch ausgebildet, so daß radiale Verformungen des Trägerelementes 6 an den Drucksensoren 5 keine Meßwertverfälschungen hervorrufen können. In vertikaler Längsrichtung ist das Trägerelement 6 bevorzugt mit zusätzlichen Verstärkungseinlagen 7 (vgl. Fig. 3) versehen, so daß die Drucksensoren 5 immer auf der gleichen Höhenlage im Behälter 1 verbleiben.

In Fig. 2 ist eine alternative Anordnung eines Trägerelements 16 für die Drucksensoren 5 dargestellt. Hierbei ist das Trägerelement 16 an der Innenwand 2 des Behälters 1 befestigt, beispielsweise aufgeschweißt oder aufgeklebt. Einer der Drucksensoren 5 etwa auf halber Höhe innerhalb des Trägerelementes 16 ist als Teilschnitt schematisch gezeigt. Bei dem dargestellten Füllstand des Materials 3 innerhalb des Behälters 1 ergibt sich im wesentlichen die in Fig. 2 rechts als schematisches Diagramm dargestellte Druck- bzw. Meßwertverteilung, wonach der im Auslauftrichter 4 am tiefsten angeordnete Drucksensor 5' entsprechend dem statischen Druck den höchsten Meßwert anzeigt. Der Druck nimmt entsprechend der Höhenlage der einzelnen Drucksensoren 5 kontinuierlich ab. Bei gleichmäßiger Auslegung und gleichmäßigem Abstand a der Drucksensoren 5 ergeben sich Meßwerte, die entsprechend dem Diagramm etwa auf einer Geraden als Meßkurve b liegen, deren Schnittpunkt mit der Ordinatenachse damit den aktuellen Füllstand $h_1$ ergibt.

Sollte einer der Drucksensoren 5 im Laufe der Zeit defekt sein, so würde deren Meßwert weit unterhalb oder oberhalb der als Geraden dargestellten Meßkurve b liegen, so daß dieser Drucksensor erkannt werden kann und für das Gesamtmeßergebnis nicht berücksichtigt wird. Durch die Vielzahl der Meßstellen kann mit den einzelnen Meßwerten die Meßkurve b und deren Verlauf, insbesondere deren Steigung genau festgelegt werden, so daß sich eine besonders hohe Meßgenauigkeit und Meßsicherheit ergibt. Diese Auswertung läßt sich mit bekannten Summier- bzw. Integriermethoden mit Hilfe einer ebenfalls bekannten Auswerteschaltung 50 ohne weiteres durchführen. Ein einfaches Beispiel ist die Bestimmung des Schnittpunkts der Geraden (oder anderen Kurve) mit der Ordinatenachse. Aufgrund der Vielzahl der Meßwerte ist eine exakte kontinuierliche Füllstandsanzeige als Schnittpunkt $h_1$ zwischen zwei benachbarten Drucksensoren gegeben.

Es sei hier angenommen, daß der unterste Drucksensor 5' im Auslauftrichter 4 einen Meßwert von z.B. 60 bar anzeigt. Die nach oben folgenden Meßwerte seien dann 50 bar, 40 bar, 30 bar, 20 bar und 10 bar, so daß sich die Gerade b mit einer Steigung von 60° zur Achse der Abszisse hin ergibt. Fällt nun beim Entleeren der Füllstand, wie dies gestrichelt angedeutet ist, so wird der unter der Schnittlinie A-A liegende Drucksensor 5'' nicht mehr beaufschlagt und alle einzelnen Meßwerte liegen z.B. um 10 bar tiefer. Auch dann muß sich wiederum der Kurvenverlauf der Meßkurve hier als Gerade b' zeigen, deren Schnittpunkt mit der Ordinatenachse den Füllstand $h_2$ ergibt.

Die Meßkurven b und b' usw. bilden somit eine zueinander parallele Kurvenschar, so daß Abweichungen hiervon in der Auswerteschaltung 50 feststellbar und einfach korrigierbar sind.

Selbstverständlich können die Meßkurven b abhängig von der Behälterform und der Anordnung der Drucksensoren auch Parabelabschnitte oder andere Kurven darstellen. Die Meßkurven sind theoretisch durch die jeweiligen Abstände der Drucksensoren 5 zueinander vorgegeben. In der Praxis erfolgt die Kalibrierung der Vorrichtung z.B. durch Feststellung der für die späteren laufenden Füllstandsmessungen repräsentativen und charakteristischen tatsächlichen Kurvenform (hier der Geraden b mit der Steigung 60°) und der Kurvenschar dabei bevorzugt bei vollständig gefülltem Behälter 1, da hierbei alle Drucksensoren 5 Meßwerte liefern und somit die Festlegung der Meßkurve b mit möglichst vielen Meßwerten am zuverlässigsten erfolgt. Der Füllstand kann dann nach und nach verringert und die entsprechenden Meßwerte können wiederum bestimmt werden. Die Kurvenform kann jedoch neben dieser empirischen Ermittlung auch durch Simulation in einer Anordnung mit verkleinertem Maßstab festgelegt werden.

Es sei darauf hingewiesen, daß für eine grobe Füllstandsmessung es auch ausreicht, nur die jeweils mit Druck beaufschlagten Drucksensoren 5, jedoch nicht deren exakten Meßwert zu erfassen, so daß der Abstand a zwischen den einzelnen Drucksensoren 5 ein Maß für die erreichbare Meßgenauigkeit hinsichtlich des Füllstandes ergibt. In dem in Fig. 2 dargestellten Beispiel ist der Drucksensor 5, durch den die Querschnittslinie A-A verläuft noch nicht vom Material 3 beaufschlagt, während der darunterliegende Drucksensor 5'' bereits beaufschlagt ist. Hierdurch kann der Füllstand als zwischen diesen beiden benachbarten Drucksensoren liegend angegeben werden, da deren Höhenlage durch die ortsfeste Anordnung am Trägerelement 16 bekannt ist.

In Fig. 3 ist eine Querschnittsansicht der Vorrichtung 110 entlang der Querschnittslinie A-A der Fig. 2 dargestellt. Das Trägerelement 16 besteht im wesentlichen aus der Profilschiene 17, die bevorzugt H-förmig ausgebildet und bevorzugt aus Metall ist und zwei Seitenstege 19 und einen Verbindungssteg 18 aufweist. Das Trägerelement 16 ist mittels rechtwinklig abgebogener Enden 24 der Seitenstege 19 an der Behälterinnenwand 2 angebracht, etwa angeschweißt oder angeklebt, ggf. auch an wenigen Stellen angeschraubt, wie dies in der linken Hälfte von Fig. 3 angedeutet ist. Hierbei reichen einige Schraubstellen 24 im oberen Bereich des Behälters 1 aus, der im allgemeinen leicht zugänglich ist. In den Verbindungssteg 18 sind die Drucksensoren 5 eingesetzt, der gegenüber dem Material 3 mit einer dauerelastischen Ummantelung 8 hermetisch abgedichtet ist. Die Drucksensoren 5 weisen in bevorzugter Ausführung an der vom Druck p abgewandten Seite eine Drucksensormembran 9 auf und sind mit ebenfalls innerhalb der Ummantelung 8 des Trägerelementes 16 verlaufenden Kabeln 30 mit der nicht näher dargestellten Auswerteschaltung 50, z.B. einem an sich bekannten Mikroprozessor verbunden. Ein bevorzugt einsetzbarer Drucksensor ist beispielsweise beschrieben in der EP-A-0 394 632 (US-Patent Nr. 4,984,468). Die Verstärkungseinlagen 7 können im Bereich der Seitenstege 19 vorgesehen sein und durch hochfeste Ummantelungen der Kabel 30 gebildet sein bzw. umgekehrt die Verstärkungseinlagen 7 als signalübertragende Kabel ausgestaltet sein.

In dem Verbindungssteg 18 ist eine hutförmige Halterung 11 des Drucksensors 5 eingesetzt, die wiederum einen Sensorkörper mit der Drucksensormembran 9 aufnimmt.

In Fig. 4 ist eine Querschnittsansicht entlang der Linie A-A in Fig. 2 einer abgewandelten Ausführung eines Trägerelementes 26 dargestellt. Hierbei ist eine Profilschiene 27 allseitig von einer Ummantelung 28 umgeben. Diese Vorrichtung eignet sich insbesondere für den hängenden Einsatz gemäß Fig. 1. Drucksensoren 25 bestehen im wesentlichen aus einem hutförmigen, keramischen Sensorkörper 21, mit einer dünnen Membran 22, auf deren Rückseite an sich bekannte DMS-Meßstreifen, bevorzugt in Dickschichttechnik vorgesehen sind, die eine dem Druck p und damit der Verformung der Membran 22 proportionale Widerstandsänderung erzeugen und ein entsprechendes Signal über die Kabel 30 an die Auswerteschaltung 50 weitergeben. Die Druckeinleitung zur Membran 22 erfolgt über einen Druckeinleitungkolben 14, der an seinem Außenumfang über einen mit elastomerem Material gefüllten Ringspalt 15 in der Halterung 23 reibungsarm geführt ist. Das elastomere Material haftet fest an den Flächen des Ringspalts 15. Es ist insbesondere vulkanisiert und blasenfrei eingebracht, wie dies in den älteren Anmeldungen EP-A-0 440 012 (US-Patentanmeldung Nr. 648,259) und EP-A-0 440 011 (US-Patentanmeldung Nr. 648,804) beschrieben wird, auf die vollinhaltlich Bezug genommen wird. Hierdurch wird bereits eine vergleichsmäßigte Druckeinleitung bewirkt, wobei durch einen weiteren Ringspalt 13, der ebenfalls wieder mit dem oben beschriebenen Elastomer gefüllt ist, eine weitere Vergleichmäßigung erreicht wird. In den Ringspalt 13 ist ein kolbenartiger Zapfen 12 der Druckeinleitungsplatte 14 eingesetzt, der über das Elastomer an seinem Bodenbereich auf die Membran 22 wirkt.

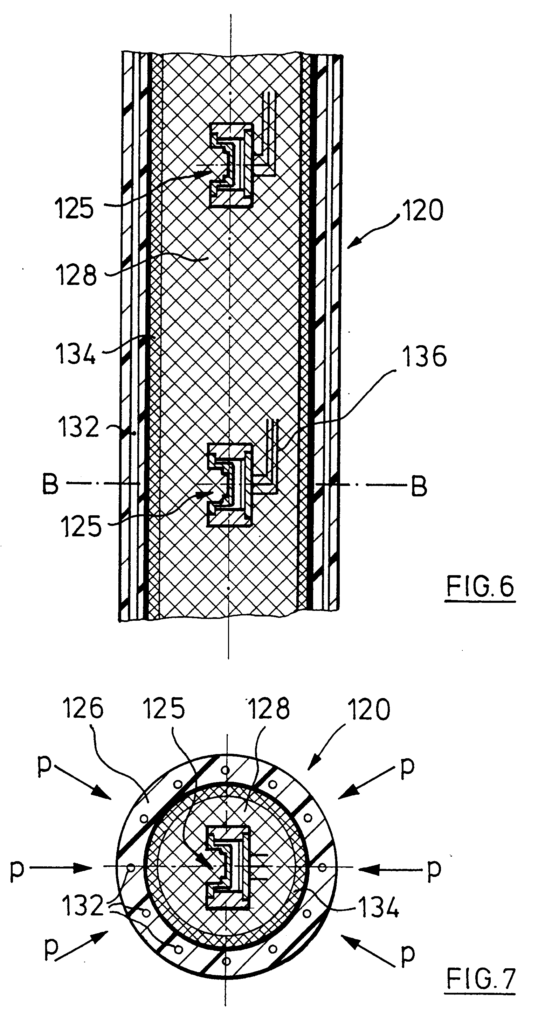

In Fig. 5 ist eine weitere Ausführungsform einer Vorrichtung 100 oder 110 dargestellt mit einem Trägerelement 36, das eine Profilschiene 37 aufweist und in Art einer Leiste oder eines Gurtes relativ flach ausgebildet ist, so daß diese um die Achse c relativ biegeweich ist; somit kann das Trägerelement 36 ohne die Gefahr von Meßfehlern auch an einer nicht vollständig ebenen Behälterinnenwand 2 angebracht werden. Damit kann das Trägerelement 36 sogar aufgerollt und als Rollenware aufbewahrt und transportiert werden. Bei der freihängenden Ausführung gemäß Fig. 1 ermöglicht die biegeweiche Ausführung eine gewisse Auslenkung ohne Meßfehler.

Im Gegensatz zu den beiden vorhergehenden Ausführungsformen ist hier der Drucksensor 35 ohne zusätzlichen Druckeinleitungskolben 14 und Zapfen 12 (Fig. 4) ausgestaltet. Vielmehr wirkt hier das elastomere Material der Ummantelung 38 bei Druckbeaufschlagung direkt auf den Sensorkörper 31 und die Membran 32. Es sei darauf hingewiesen, daß bei allen Ausführungsbeispielen die Drucksensoren 5 etc. vollständig im Trägerelement eingekapselt sind, so daß das Material 3 diese nicht beschädigen kann. Somit ergibt sich eine sehr verschleißfeste und robuste Meßvorrichtung mit hoher Meßgenauigkeit und Meßsicherheit.

Die Figuren 6 und 7 zeigen einen Abschnitt eines Ausführungsbeispiels einer erfindungsgemäßen Vorrichtung 120 mit in Abstand zueinander angeordneten Drucksensoren 125 (vgl. Fig. 3 und 5), die in einem Körper 128 aus elastomerem Material mit rundem, vorzugsweise kreisförmigem oder ovalem Querschnitt vollständig eingebettet sind.

Bezüglich des grundsätzlichen Aufbaus der Vorrichtung 120, der Ausgestaltung und Anordnung sowie Beschaltung der Drucksensoren und des Einsatzes der erfindungsgemäßen Vorrichtung wird auf die Beschreibung der vorhergehenden Ausführungsbeispiele verwiesen. Die vorliegende Beschreibung beschränkt sich deshalb auf die gegenüber diesen Ausführungsbeispielen vorgenommenen Modifikationen und Verbesserungen.

Der Körper 128 ist von einem Mantel 126 umgeben, der in axialer und vorzugsweise auch in Umfangsrichtung unelastisch, in radialer Richtung jedoch verformbar ausgebildet ist. Der Mantel 126 kann beispielsweise ein Kunststoffschlauch sein, in dem axial verlaufende unelastische Fäden 132 beispielsweise aus Metall oder Kunststoff umfangsmäßig verteilt eingebettet sind. Anstelle einer axialen Erstreckung käme auch ein spiralförmig angeordneter Verlauf der Fäden 132 in Frage. Die äußere Oberfläche des Mantels 126 sollte bei den meisten Anwendungen verschleißfest sein, insbesondere bei der Füllstandsmessung in Bunkern. Der Mantel 126 könnte auch durch ein (Metall-)Gewebe gebildet sein.

Der Körper 128 besteht aus möglichst inkompressiblem elastomerem Material, beispielsweise blasenfreiem Natur- oder Silikonkautschuk oder ähnlichen Materialien, wie sie beispielsweise in der EP-PS 0 145 001 (US-Patent Nr. 4,644,805) für ähnliche Zwecke genannt sind.

Obwohl als Drucksensoren 125 bevorzugt diejenigen gemäß den vorherigen Ausführungsbeispielen eingesetzt werden, können auch beliebige andere Drucksensoren an deren Stelle treten.

Der Körper 128 ist im Mantel 126 an dessen Innenmantelfläche beim Ausführungsbeispiel durch elastomeres Material festhaftend befestigt, das in einem Ringspalt 134 eingebracht ist.

Nachstehend werden verschiedene Alternativen der Herstellung des Körpers 128 bzw. dessen Einfügen in den Mantel 126 als beispielsweise Möglichkeiten beschrieben:

Eine erste Möglichkeit der Herstellung des Körpers 128 besteht darin, in einer rohrartigen Form die Drucksensoren 125 anzuordnen. Abhängig von der nachstehend noch im einzelnen zu beschreibenden Beschaltung ist entweder mindestens eine alle Sensoren mit der Auswerteschaltung 50 mechanisch (und elektrisch) verbindende Leitung oder aber eine Art Kabelbaum 136 vorhanden, falls pro Drucksensor je eine Einzelleitung vorgesehen ist. Die einzelnen Drucksensoren 125 oder -je nach Steifigkeit- die dazwischen liegenden Leitungsstücke werden mit entsprechenden radialen Abstandselementen versehen, wie dies in der Gießtechnik üblich ist. Je nach Länge des herzustellenden Körpers 128 und dessen Durchmesser kann entweder ein geschlossenes gerades Rohr als Form verwendet werden, in das die "armierte" Drucksensor-/Leitungsanordnung eingeschoben bzw. eingezogen wird, oder aber das Rohr ist längsgeteilt, was das Einsetzen der Drucksensor-/Leitungsanordnung erleichtert. Für große Längen kann anstelle eines geraden Rohres auch eine (längsgeteilte) Rohrschlange ähnlich einer Heiz- oder Kühlschlange verwendet werden.

Auch ein Strangpressen des Körpers 128 ist in Betracht zu ziehen.

Für das Einbringen des Körpers 128 in den Mantel 126 gibt es verschiedene Möglichkeiten:
Eine erste Möglichkeit besteht darin, den Körper 128 lose in den als Schlauch ausgebildeten Mantel 126 einzusetzen, nachdem die gegenüberliegenden Außen- bzw. Innenmantelflächen mit einem Primer oder Benetzungsmittel behandelt wurden. Der verbleibende Spalt wird dann mit einem verhältnismäßig flüssigen aushärtbaren Stoff, etwa Silikon- oder Naturkautschuk oder einem Zweikomponenten-Kunststoff gefüllt, der dann heiß oder kalt vulkanisiert bzw. ausgehärtet wird, so daß sich ein festes Haften des Materials an den Kontaktflächen ergibt. Ein regelmäßiger Spalt kann durch am Umfang des Körpers 128 angegossene Noppen oder Vorsprünge oder dgl. erzielt werden.

Eine zweite Möglichkeit des Einbringens des Körpers 128 in den Mantel 126 besteht darin, letzteren vorzugsweise bei verschlossenem einen Ende unter erheblichen Druck zu setzen, so daß er sich radial so weit ausdehnt, daß der Körper 128 eingeführt werden kann. Nach Wegnehmen des Druckes legt sich der Mantel 126 so fest am Körper 128 an, daß ggf. Vulkanisations- oder Klebevorgänge nicht erforderlich sind.

Als dritte Möglichkeit des Einbringens des Körpers 128 in den Mantel 126 kommt eine Ausdehnung des Körpers 128 in Frage. Diese kann dadurch erreicht werden, daß im Körper 128 Hohlräume vorgesehen sind, die mit mindestens einer axial durchgehenden Leitung verbunden sind, oder daß überhaupt nur eine axial durch den Körper 128 verlaufende Leitung vorgesehen ist. Diese bzw. die Hohlräume werden dann nach losem Einsetzen des Körpers 128 in den Mantel 126 mit einer Flüssigkeit unter derartigem Druck gefüllt, daß sich der Körper 128 ausweitet und sich fest an die Innenmantelfläche des Mantels 126 anlegt. Die Flüssigkeit kann entweder aushärtbar sein, so daß sich eine permanent stabile Anordnung ergibt, oder der Eingang der Leitung wird lösbar verschlossen, so daß der Druck bei Bedarf verringert und der Körper 128 aus dem Mantel 126 herausgezogen werden kann.

Als weitere Möglichkeit wird das an sich bekannte Extrudierverfahren genannt.

Eine alternative Ausführungsform einer Ummantelung könnte darin bestehen, daß ein unelastisches Band spiralförmig um den Körper 128 gewickelt wird.

Es sollen nun weitere Einzelheiten der elektrischen Beschaltung der Drucksensoren angegeben werden.

Hierzu können die Drucksensoren 125 mit entsprechenden (ASIC)-Chips bestückt sein, die eine individuelle Abfrage durch die Auswerteschaltung 50 erlauben. Eine derartige Abfrage kann entweder über eine Einzel-(oder Doppel-)Leitung seriell oder eine Busleitung mit entsprechender Byte-Breite in byte-paralleler Abfrage erfolgen. Jeder Drucksensor 125 besitzt beispielsweise eine eigene Kennung und die einzelnen Drucksensoren 125 werden vom Mikroprozessor der Auswerteschaltung 50 nacheinander aufgerufen. Alternativ dazu kann die Abfrage aber auch von einem Drucksensor zum nächsten zwangsweise weitergeschaltet werden, so daß keine Kennung erforderlich ist, sondern lediglich eine den wechselnden Zustand angebende Kippstufe.

Für die Leistungszufuhr zu den einzelnen Drucksensoren kann der Abfrageimpuls ausreichen, der in Gleichstrom umgewandelt an die Widerstandsmeßbrücke des Drucksensors 125 gelegt wird. Das sich ergebende Analogsinal wird in ein Digitalsignal umgewandelt und als Antwortsignal an die Auswerteschaltung 50, z.B. über eine Ringschaltung zurückgegeben.

Die Auswerteschaltung 50 nimmt dann die bereits beschriebenen Berechnungen vor.

Bisher wurde als Anwendung der erfindungsgemäßen Vorrichtung das Messen des Füllstands eines Behälters oder anderen Containers angegeben.

Die erfindungsgemäßen Vorrichtungen erlauben jedoch einen wesentlich vielseitigeren Einsatz: Im Prinzip ist die erfindungsgemäße Vorrichtung überall dort einsetzbar, wo Druckänderungen bzw. der Druckverlauf über einer begrenzten größeren Strecke festgestellt werden soll.

Als weitere Beispiele für einen vertikalen Einsatz sei auf das Eintauchen in Flüssigkeiten verwiesen, in denen die Auswirkungen von Strömungen, Druckwellen, Explosionen etc. über der Höhe festgestellt werden sollen.

Ferner ließe sich beispielsweise auch die Verdichtung von Beton beim Betonieren von Objekten größerer Höhe feststellen.

Aber auch nicht-vertikale Anwendungen kommen in Frage.

So läßt sich die erfindungsgemäße Vorrichtung quer in eine Fahrbahn einfügen und es kann damit festgestellt werden, wo oder auch wann ein Fahrzeug die Vorrichtung überquert.

Ferner kann die gleichmäßige bzw. ungleichmäßige Belastung einer Unterlage durch ein größeres Objekt, beispielsweise einen Pfeiler, einen Container, ein Gebäude oder dgl. festgestellt werden.

Aufgrund der kabelförmigen Ausbildung ist auch die Möglichkeit gegeben, die erfindungsgemäße Vorrichtung wie ein Kabel in das Erdreich einzuschießen.

Insgesamt zeigt sich somit, daß durch die Erfindung eine Vorrichtung geschaffen wird, die bei verhältnismäßig kostengünstiger Herstellung und einfachem Aufbau vielfältige Anwendungsmöglichkeiten besitzt.

**Patentansprüche**

1. Vorrichtung zum Feststellen der Druckverteilung über einer begrenzten Strecke, insbesondere zur Füllstandsanzeige in Behältern (1), mit einer Vielzahl von in vornehmlich gleichen Abständen zueinander angeordneten Drucksensoren (5;25;35;125), die mit einer Auswerteschaltung (50) verbunden sind,
dadurch gekennzeichnet, daß
die Drucksensoren (5;25;35;125) linear auf/in einem länglichen Trägerelement (6;16;26;36) angeordnet sind.

2. Vorrichtung nach Anspruch 1, dadurch gekennzeichnet, daß das Trägerelement (6;16;26;36) in Vertikalrichtung zugfest und in zumindest einer Querrichtung (c) hierzu flexibel ausgebildet ist.

3. Vorrichtung nach Anspruch 1 oder 2, dadurch gekennzeichnet, daß das Trägerelement (6;16;26;36) zumindest im Bereich der Drucksensoren (5;25;35;125) eine nachgiebige, dauerelastische Ummantelung (8;28;38;126) aufweist.

4. Vorrichtung nach Anspruch 1, 2 oder 3, dadurch gekennzeichnet, daß das Trägerelement (6;16;26;36) eine Profilschiene (17;27;37) aufweist mit Öffnungen, in die die Drucksensoren (5;25;35;125) eingesetzt sind, sowie bevorzugt hochzugfeste Verstärkungseinlagen (7).

5. Vorrichtung nach einem der Ansprüche 2 bis 4, dadurch gekennzeichnet, daß in dem Trägerelement (6;16;26;36) bzw. in der Ummantelung (8;28;38; 126) Kabel (30) eingeschlossen sind, die auch als hochzugfeste Verstärkungseinlagen dienen können und die Drucksensoren (5;25;35;125) mit der Auswerteschaltung (50) verbinden.

6. Vorrichtung nach einem der vorhergehenden Ansprüche, dadurch gekennzeichnet, daß die Drucksensoren (125) in einem vorzugsweise runden, strangförmigen Körper (128) aus elastomerem Material eingebettet sind, der von einem umfangsmäßig unelastischen, in radialer Richtung jedoch verformbaren Mantel (126) in fester Anlage damit umgeben ist.

7. Vorrichtung nach Anspruch 6, dadurch gekennzeichnet, daß der Mantel (126) schlauchförmig ist und vorzugsweise axial oder spiralförmig verlaufende, umfangsmäßig verteilte unelastische Armierungsfäden (132) aufweist oder als unelastisches Gewebe ausgebildet ist.

8. Vorrichtung nach Anspruch 6 oder 7, dadurch gekennzeichnet, daß ein zwischen dem Körper (128) und dem Mantel (126) ausgebildeter Spalt (134) mit elastomerem Material gefüllt ist, das fest an den Kontaktflächen haftet.

9. Vorrichtung nach einem der Ansprüche 6 bis 8, dadurch gekennzeichnet, daß der Körper (128) mit mindestens einer in Längsrichtung verlaufenden Fluidleitung und ggf. weiteren Hohlräumen versehen ist, die mit unter Druck stehender Flüssigkeit oder unter Druck ausgehärtetem Material gefüllt sind.

10. Vorrichtung nach einem der vorhergehenden Ansprüche, dadurch gekennzeichnet, daß das Trägerelement (16) mit Mitteln (24) zur Befestigung an der Wand (2) des Behälters (1), am Erdboden oder dergleichen, versehen ist.

11. Vorrichtung nach einem der vorhergehenden Ansprüche, dadurch gekennzeichnet, daß die Drucksensoren (z.B. 125) mit entsprechender Abfrageelektronik ausgestattet und über eine gemeinsame Leitung mit der Auswerteschaltung (50) verbunden sind, wobei die Drucksensoren (125) mit unterschiedlichen Kennungen versehen und nacheinander von der Auswerteschaltung (50) abfragbar sind, wobei bevorzugt der Abfragezustand von einem Drucksensor (125) zum nächsten weitergeschaltet werden kann.

12. Vorrichtung nach einem der vorhergehenden Ansprüche, dadurch gekennzeichnet, daß die Energie zur Speisung der Drucksensoren (5;25;35;125) vom Abfrageimpuls der Auswerteschaltung (50) geliefert wird.

13. Vorrichtung nach einem der vorhergehenden Ansprüche, dadurch gekennzeichnet, daß die Meßwerte der Drucksensoren (5;25;35;125) in der Auswerteschaltung (50) miteinander und zu den Abständen zwischen den Drucksensoren (5;25;35;125) in Beziehung gesetzt werden, um die Druckverteilung über die begrenzte Strecke, insbesondere den aktuellen Füllstand im Behälter (1) zu erhalten.

14. Verfahren zum Herstellen einer Vorrichtung nach einem der vorhergehenden Ansprüche, dadurch gekennzeichnet, daß eine entsprechende Anzahl von Drucksensoren (125) in vorzugsweise regelmäßigen Abständen in elastomeres Material unter Bildung eines strangförmigen Körpers (128) eingebettet und der Körper (128) in einen Mantel (126) unter Herstellung einer festen Verbindung damit eingebracht wird, wobei bevorzugt die Mantelfläche des Körpers (128) mit Noppen oder dergleichen Abstandselementen versehen ist bzw. wird und der Körper (128) unter Bildung eines Ringspalts (134) in den Mantel (126) eingesetzt und der Körper (128) dadurch festhaftend mit dem Mantel (126) verbunden wird, daß in den Ringspalt (134) elastomeres Material eingefüllt oder an den Ringspalt (134) ein Druck angelegt, der Körper (128) darin eingesetzt und der Druck wieder weggenommen wird oder im Körper (128) eine Fluidleitung und ggf. zusätzliche Hohlräume vorgesehen und nach Einsetzen des Körpers (128) in den Mantel (126) durch Füllen der Leitung und der Hohlräume mit einer ggf. aushärtbaren Flüssigkeit unter Druck gesetzt werden.

15. Verwendung einer Vorrichtung nach einem der vorhergehenden Ansprüche zur Feststellung des Füllstands von flüssigem oder schüttfähigem Gut in einem Behälter, der Druckverteilung in sich bewegenden Flüssigkeiten, der Verdichtung von Beton in Betonobjekten bei deren Herstellung, der Druckverteilung in der Auflagerfläche eines großflächigen Objekts bzw. des Auftretens von Druck in einer Fahrbahn.

FIG.1

FIG.2

FIG.3

FIG.4

FIG.5

FIG.6

FIG.7